# EUROPÄISCHE PATENTSCHRIFT

(11) **EP 0 612 492 B1**
(45) Veröffentlichungstag und Bekanntmachung des Hinweises auf die Patenterteilung: **30.07.1997**
(21) Anmeldenummer: 94101761.8
(22) Anmeldetag: 05.02.1994
(51) Int. Cl.: A47G 27/04, B60N 3/04

(54) **Befestigungselement zur rutschsicheren Festlegung eines Teppichs**
Fixing element to prevent a mat from slipping
Dispositif de fixation pour prévenir le glissement d'un tapis

(30) Priorität: 24.02.1993 DE 9302659 U
(43) Veröffentlichungstag der Anmeldung: 31.08.1994
(73) Patentinhaber: A. Raymond GmbH & Co. KG, D-79539 Lörrach (DE)
(72) Erfinder: Hullmann, Klaus, D-79540 Lörrach (DE)
(74) Vertreter: Kirchgaesser, Johannes, Dipl.-Ing.

(56) Entgegenhaltungen:
- DE-C- 453 624
- DE-U- 9 016 691
- DE-U- 9 108 683
- FR-A- 2 677 590

## Beschreibung

Die Erfindung bezieht sich auf ein Befestigungselement zur rutschsicheren Festlegung eines Teppichs, insbesondere eines Schonteppichs auf einer Unterlage aus Filzstoff oder dergleichen Material, welche sich beispielsweise auf dem Boden des Fahrerraumes eines Kraftfahrzeugs befindet.

Schonteppiche werden üblicherweise mittels Druckknöpfen auf der Unterlage befestigt, welche zu diesem Zweck an vorbestimmten Stellen mit den zugehörigen Gegenknöpfen (DE 31 42 761 A1) oder Raststiften versehen sind (DE 453 624 C1). Diese Befestigungsstellen sind sehr teuer, weil sie mindestens aus zwei Teilen bestehen, die zudem bei der Vormontage noch sehr genau plaziert werden müssen.

Außerdem gibt es an den Befestigungsstellen - bedingt durch die notwendige Bauhöhe der Druckknöpfe oder Raststifte - kleine, unelastische Erhebungen im Teppich, die in der sonst weichen Teppichauflage als Fremdkörper empfunden werden und dazu führen, daß die Schuhe beim Darübergleiten an den hochstehenden Knöpfen hängenbleiben.

Aus **FR - A - 2 677 950** ist ein Befestigungselement zur Festlegung eines Teppichs bekannt, welches aus einer an der Unterseite des Teppichs verankerbaren Metallplatte besteht, die mit einer Vielzahl von an der Plattenunterseite abstehenden Krallen versehen ist. Diese Krallen sind aus der Plattenunterseite unter einem spitzen Winkel herausgedrückt und nach zwei entgegengesetzten Seiten gerichtet. Um diese Platte in den darunterliegenden Filzstoff wirksam zu verkrallen, muß die Platte wohl hin- und hergeschoben werden, wobei die Spitzen nur zum Teil in den Filz eindringen. Diese Krallenbefestigung bietet keine Gewähr für eine rutschsichere Festlegung in allen Richtungen und dürfte selbst in Richtung der Krallenspitzen soviel Spiel haben, daß auch in dieser Richtung eine unerwünschte Restbeweglichkeit bleibt.

Aus **DE - U - 9 016 691** ist ebenfalls ein Befestigungselement für Fußmatten bekannt, welches aus einem U - förmig gebogenen Stanzteil aus Federstahl besteht, an dessen beiden Schenkeln endseitig gegeneinander gerichtete Krallen zum Festlegen des Stanzteils auf dem Randstreifen des Teppichs angeformt sind. An dem einen Schenkel sind zwei dornartige Ansätze ( Krallen ) zum Feststecken in der unverschieblichen Unterlage vorgesehen. Diese Krallen sind aus der Schenkelunterseite ebenfalls unter einem spitzen Winkel herausgestanzt und gedrückt. Ihre Spitzen weisen allerdings in die gleiche Richtung, so daß diese Spitzen sich auch nur in der einen Richtung in der Filzmatte vergraben können. In der entgegengesetzten Richtung sowie quer dazu kann von einer rutschfesten Festlegung des Teppichs nicht die Rede sein.

Aufgabe der Erfindung ist es, die Befestigungselemente so zu gestalten, daß diese absolut rutschsicher in der Teppichunterlage festlegbar sind und dabei gleichzeitig Wölbungen oder Höhenauflagen an den Befestigungsstellen vermieden werden.

Diese Aufgabe wird bei der vorgenannten verankerbaren Metallplatte dadurch gelöst, daß die umgebogenen Spitzen der Krallen nach allen Seiten gerichtet und um einen Winkel von mindestens 180° zur Plattenunterseite zurückgebogen sind.

Diese Krallenplatten werden an den Ecken des Schonteppichs vorzugsweise mit in das Gewebe eindringenden Krampen verankert, welche so umgebogen werden, daß an der Teppichoberseite nichts zu sehen ist. Nun kann der Schonteppich auf die Filzunterlage aufgelegt werden, wobei die nach unten abstehenden Krallen sich in die Filzoberfläche eingraben und den Teppich gegen seitliches Verrutschen sichern. Hinzukommt noch eine gewisse Bodenhaftung gegen Abreißen, weil die Krallenspitzen sich nach allen Seiten seitlich unter die Filzhaare schieben und dadurch wie bei Kletten festgehalten werden.

Dieser Verklettungseffekt kann noch dadurch verstärkt werden, daß die Krallenspitzen in weiterer Ausgestaltung der Erfindung um etwas mehr als um 180° umgebogen werden und damit unter einem spitzen Winkel zur Plattenunterseite gerichtet sind. Dadurch wird außerdem die "Krallenoberfläche" insgesamt entschärft, so daß die Hände beim Anfassen gegen Verletzung geschützt sind.

In der Zeichnung ist ein Ausführungsbeispiel der Erfindung dargestellt und soll nachfolgend näher erläutert werden. Es zeigt:
- Fig. 1: eine Draufsicht auf die Krallenplatte,
- Fig. 2: einen Schnitt durch eine Haltekrallengruppe gemäß Linie II - II in Figur 1,
- Fig. 3: einen Schnitt durch einen Verankerungskrampen gemäß Linie III - III in Figur 1,
- Fig. 4: ein mit einer Krallenplatte bestückter Schonteppich vor dem Auflegen auf die Unterlage,
- Fig. 5: der Schonteppich mit Krallenplatte nach dem Auflegen auf die Unterlage und
- Fig. 6: eine vergrößerte Darstellung einer Krallengruppe mit Eingriff der Krallen im Schlingengewebe.

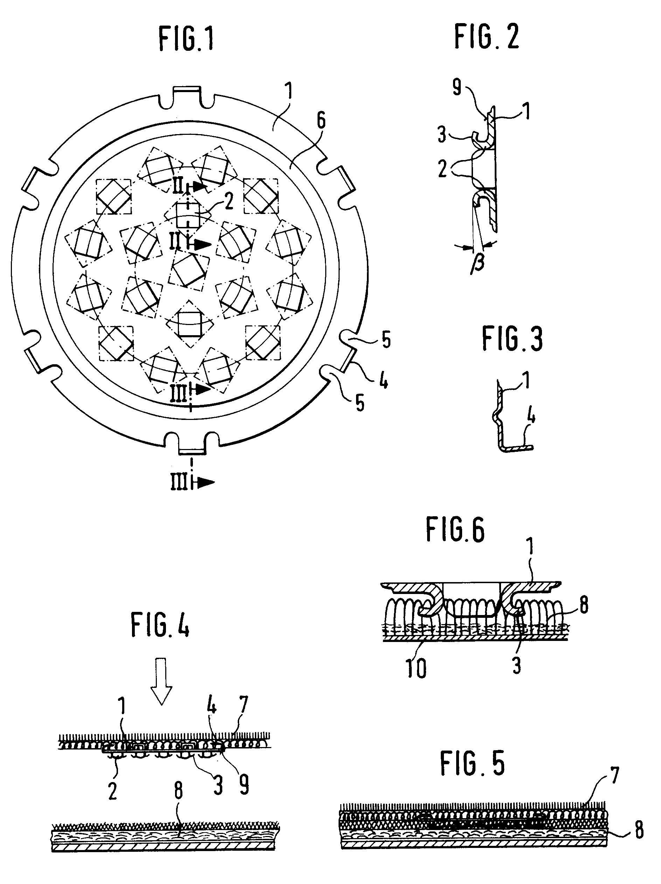

Das in den Figuren dargestellte Befestigungselement besteht aus einer runden Metallplatte 1 mit einer Vielzahl von an der Plattenunterseite 9 abstehenden Krallen 2, welche durch kreuzweises Einschlitzen und zurückbiegen der so gebildeten Krallenspitzen 3 um einen Winkel von mindestens 180° zur Plattenunterseite gebildet sind (Figur 2). Die aus je vier Krallen 2 gebildeten Krallengruppen sind über die ganze Platte gleichmäßig verteilt und mit ihren Spitzen 3 nach allen Seiten gerichtet.

Am Rand der Platte 1 sind über den Umfang gleichmäßig verteilt, nach der anderen Seite sechs angespitzte Haltekrampen 4 angewinkelt, welche beiderseits von kleinen Aussparungen 5 umgeben sind. Im Abstand vom Rand ist aus Stabilitätsgründen eine umlaufende Sicke 6 eingedrückt.

Die Platte 1 wird, wie aus Figur 4 ersichtlich, mit Hilfe der Haltekrampen 4 an der Unterseite des Schonteppichs 7 verankert, wobei die in das Teppichgewebe eindringenden Krampen 4 zur Mitte hin umgebogen werden. Die Platte kann selbstverständlich auch auf andere Art, beispielsweise durch Kleben oder Vernähen, an der Teppichunterseite befestigt werden.

Diese Platte ist bestimmt zur rutschsicheren Befestigung des Schonteppichs 7 auf einer Unterlage 8 aus Filzmaterial oder auch aus Schlingenware, wobei die Unterlage 8 auf dem Karosserieboden 10 des Fahrerraumes aufgeklebt ist. Wichtig bei der Materialwahl ist, daß die Krallenspitzen 3 in der Oberfläche der Unterlage Halt finden, sobald der Teppich 7 mit der Platte 1 zusammen fest auf die Unterlage 8 aufgedrückt wird (Figur 5).

Hierbei verhaken sich die Spitzen 3, wie aus Figur 6 ersichtlich, in den Schlingen oder der oberen Filzlage. Die Krallenspitzen 3 werden ähnlich wie beim Klettenverschluß gehalten. Sie können jedoch, genau wie die Kletten, mit entsprechendem Kraftaufwand wieder losgerissen werden.

## Patentansprüche

1. Befestigungselement zur rutschsicheren Festlegung eines Teppichs (7) auf einer Unterlage (8) aus Filzstoff oder dergleichen, bestehend aus einer an der Unterseite des Teppichs (7) mittels Krampen (4) verankerbaren Metallplatte (1) mit einer Vielzahl von an der Plattenunterseite (9) abstehenden Krallen (2), **dadurch gekennzeichnet,** daß die umgebogenen Spitzen ( 3 ) der Krallen (2) nach allen Seiten gerichtet und um einen Winkel von mindestens 180 ° zur Plattenunterseite (9) zurückgebogen sind.

## Claims

1. A fixing element for non-slip fixing of a carpet (7) on an underlay (8) of felt material or the like, comprising a metal plate (1) which can be anchored to the underside of the carpet (7) by means of clasps (4), the metal plate having a plurality of claws projecting from the plate underside (9), characterised in that the bent-over tips (3) of the claws (2) are directed towards all sides and are bent back through an angle of at least 180° with respect to the plate underside (9).

## Revendications

1. Dispositif de fixation pour prévenir le glissement d'un tapis ( 7 ) sur une surface sous-jacente ( 8 ) en feutre ou faite d'une matière similaire, se composant d'une plaque métallique ( 1 ) destinée à être ancrée contre la face inférieure du tapis ( 7 ) au moyen de crampons ( 4 ), comportant une pluralité de griffes ( 2 ) faisant salle sur la face inférieure ( 9 ) de la plaque, caractérisé en ce que les extrémités repliées ( 3 ) des griffes ( 2 ) sont orientées dans toutes les directions et sont repliées vers l'arrière sous un angle d'au moins 180° par rapport à la face inférieure ( 9 ) de la plaque.
